Europäisches Patentamt

European Patent Office

Office européen des brevets

(19)

(11) Veröffentlichungsnummer: **0 076 543**
**B1**

(12) **EUROPÄISCHE PATENTSCHRIFT**

(45) Veröffentlichungstag der Patentschrift:
14.01.87

(51) Int. Cl.⁴: **G 01 K 7/24**

(21) Anmeldenummer: **82201210.0**

(22) Anmeldetag: **29.09.82**

(54) Schaltungsanordnung zur Messung von Temperaturen.

(30) Priorität: **05.10.81 DE 3139556**

(43) Veröffentlichungstag der Anmeldung:
**13.04.83 Patentblatt 83/15**

(45) Bekanntmachung des Hinweises auf die Patenterteilung:
**14.01.87 Patentblatt 87/3**

(84) Benannte Vertragsstaaten:
**DE FR GB IT NL SE**

(56) Entgegenhaltungen:
**US-A-3 728 702**

**FUNKSCHAU, Heft 14, 1978, Seiten 679-682,
München, DE; J. SCHÜRMANN: "Sensoren für die
Automobil-Elektronik"
JOURNAL OF RESEARCH OF THE NATIONAL
BUREAU OF STANDARDS - C. ENGINEERING AND
INSTRUMENTATION, Band 74C, Nr. 1 und 2, Januar-
Juni 1970, Seiten 15-18, Washington, US; R.D.
CUTKOSKY: "An A-C resistance thermometer
bridge"
REGELUNGSTECHNISCHE PRAXIS, Band 23, Nr. 3,
März 1981, Seiten 83-88, München, DE; W.
Bambuch: "Electronica 80: Sensoren"**

(73) Patentinhaber: **Philips Patentverwaltung GmbH,
Billstrasse 80, D-2000 Hamburg 28 (DE)**
(84) Benannte Vertragsstaaten: **DE**

(73) Patentinhaber: **N.V. Philips' Gloeilampenfabrieken,
Groenewoudseweg 1, NL- 5621 BA Eindhoven (NL)**
(84) Benannte Vertragsstaaten: **FR GB IT NL SE**

(72) Erfinder: **Begehr, Dieter, Bekkamp 107, D-2000
Hamburg 70 (DE)**
Erfinder: **Keitel, Gerd, Dr., Eschenweg 27c, D-2070
Ahrensburg (DE)**
Erfinder: **Burmeister, Rainer, Herderstrasse 28,
D-2000 Hamburg 76 (DE)**

(74) Vertreter: **Hartmann, Heinrich, Dipl.- Ing., Philips
Patentverwaltung GmbH Billstrasse 80 Postfach
10 51 49, D-2000 Hamburg 28 (DE)**

## Beschreibung

Die Erfindung bezieht sich auf eine Schaltungsanordnung zur Messung vom Temperaturen unter Verwendung eines Halbleiterelementes, dessen Leitfähigkeit temperaturabhängig ist und das mit einer flächigen und gegenüberliegend mit einer nahezu punktförmigen Elektrode belegt ist und eine Schwelltemperatur hat oberhalb der die Leitfähigkeit des Halbleiterelementes stromrichtungsabhängig ist, einer an die Elektroden angelegten Signalquelle und einer Meßeinrichtung sowie auf ein für eine solche Schaltungsanordnung geeignetes Halbleiterelement.

Eine derartige Schaltungsanordnung ist aus Funkschau 1978, H. 14, S.679 bis 682, bekannt.

Halbleiterelemente, deren temperaturabhängiger Widerstand zur elektronischen Messung von Temperaturen benutzt wird, sind bekannt. Es gibt Halbleiterelemente, die nach dem Prinzip des radialen Ausbreitungswiderstandes arbeiten. Sie bestehen im wesentlichen aus einem Halbleiterkristall, bei dem eine Fläche mit einer großflächigen Elektrode belegt ist und eine weitere, gegenüberliegende Fläche eine sehr kleine Elektrode trägt. Zwischen beiden Elektroden bildet sich in erster Näherung eine kegelförmige Stromverteilung aus, die Toleranzen in den Kristallabmessungen in bezug auf den Innenwiderstand des Halbleiterelements weitgehend unwirksam macht. Ferner sind bei dieser Bauform Beeinflussungen des Stromes durch Oberflächeneffekte am Kristall vermieden. Im Vergleich zu den bisher üblichen NTC-Sensorelementen ist der Meßfehler bei den nach dem Prinzip des radialen Ausbreitungswiderstands arbeitenden Halbleiterelementen wesentlich geringer.

Diese Halbleiterelemente haben jedoch zwei wesentliche Nachteile. Zum einen ist ihr Verwendungsbereich zu hohen Temperaturen hin durch den Einsatz der Eigenleitung beschränkt, da der im Bereich der Fremdleitung mit steigender Temperatur zunehmende Innenwiderstand des Halbleiterelementes bei Einsatz der Eigenleitung wieder abfällt. Andererseits ist der Innenwiderstand des Halbleiterelementes bedingt durch den starken Unterschied der Elektrodenflächen von der Richtung des durchfließenden Stromes abhängig. Diese Stromrichtungsabhängigkeit des Innenwiderstandes nimmt beim Einsatz der Eigenleitung sehr stark zu.

Aus der europäischen Patentanmeldung EP-A-0 028 387 ist ein Temperatursensor aus einem Halbleiterkörper bekannt, der auf seiner Oberseite mit mindestens zwei Metallkontakten und auf seiner der Oberseite abgewandten Fläche mit einer Metallbelegung versehen ist. Bei einem solchen Halbleiterelement dienen die Metallkontakte an der Oberseite als Anschlüsse. Die Stromausbreitungslinien verlaufen vom einen Metallkontakt durch den Halbleiterkörper zur Metallbelegung und von der Metallbelegung zurück durch den Halbleiterkörper zum weiteren Metallkontakt. Die Stromausbreitungslinien sind also in beiden Richtungen durch den Halbleiterkörper geführt, wodurch eine Verringerung der Stromrichtungsabhängigkeit des Innenwiderstandes des Halbleiterkörpers erreicht wird, vgl. Fig. 5 der genannten Anmeldung. Auch hier tritt jedoch bei Einsatz der Eigenleitung eine starke Zunahme der Unsymmetrie des Widerstandes und damit eine Zunahme des Meßfehlers auf.

In der deutschen Patentanmeldung DE-A- 30 41 818 wird ein Halbleiterbauelement für Temperaturen oberhalb des Einsetzens der Eigenleitung vorgeschlagen, bei dem ein Halbleiterkörper mit zwei Elektroden sehr unterschiedlicher Flächen versehen ist. Zusätzlich wird der das Halbleiterbauelement durchfließende Strom in seiner Stärke und Richtung so gewählt, daß sich in dem Halbleiterkörper eine solche elektrische Feldstärkeverteilung einstellt, daß praktisch alle Minoritätsladungsträger zu der am negativen Potential liegenden Elektrode abgeführt werden und damit entsprechend viele Majoritätsladungsträger im Halbleiterkörper festgebunden werden und die Eigenleitung weitgehend unwirksam ist. Bei dieser Polung wird der Einfluß der Eigenleitung erst bei einer erheblich höher liegenden Temperatur wirksam, der Bereich, in dem die Fremdleitung überwiegt, also zu höheren Temperaturen hin ausgedehnt. Die Widerstandskennlinie des Halbleiterelementes steigt in diesem Bereich weiter mit der Temperatur, und der Meßbereich des Halbleiterbauelements ist zu höheren Temperaturen hin vergrößert.

Auch bei einem so ausgestalteten Halbleiterbauelement ist die starke Stromrichtungsabhängigkeit der Widerstandskennlinie insbesondere im oberen Teil des Temperaturmeßbereichs nachteilig.

Bekannte Temperatursensoren der beschriebenen Bauformen haben Innenwiderstände im Bereich von einigen 100 Ohm bis einigen Kilo-Ohm und sind damit auf den Einsatz in den üblichen Halbleiterschaltungen zur Messung und Signalauswertung abgestimmt. Sie sind dabei in den bekannten Schaltungen stets mit einer Gleichspannung oder einem Gleichstrom beaufschlagt. Bei dieser Betriebsweise bewirkt die Stromrichtungsabhängigkeit des Innenwiderstands Meßfehler und engt die konstruktiven Möglichkeiten beim Schaltungsentwurf ein. Auch der Temperatursensor gemäß der europäischen Patentanmeldung EP-A- 0 028 387 überwindet diese Nachteile nicht. Einerseits ist nämlich die Stromrichtungsabhängigkeit des Innenwiderstandes nur im Temperaturbereich unterhalb des Einsatzes der Eigenleitung verringert, der Halbleiterkörper aber gegenüber der einfachen Bauweise stark vergrößert. Diese spezielle Formgebung verursacht nicht nur eine höhere thermische Trägheit des Halbleiterelementes, sondern zwingt auch zu einer nicht für alle Anwendungen zweckmäßigen Gehäusebauform.

Aus Journal of Research of the National Bureau of Standards - C. Engineering and Instrumentation, Bd. 74C, Nr. 1 und 2, Januar-Juni 1970, S. 15 bis 18, ist es bekannt, zur Temperaturmessung verwendete Widerstandsbrücken mit einem Wechselstrom zu speisen.

Die Erfindung hat die Aufgabe, eine einfache, genau arbeitende und kostengünstige Meßanordnung mit hoher Meßempfindlichkeit auch für Temperaturen zu schaffen, bei denen die Eigenleitung des Halbleiterelementes einsetzt, und ein für diese Anordnung besonders geeignetes Halbleiterelement anzugeben.

Diese Aufgabe wird erfindungsgemäß durch die im Anspruch 1 enthaltenen Merkmale hinsichtlich der Schaltungsanordnung sowie durch die im Anspruch 7 enthaltenen Merkmale hinsichtlich des Halbleiterelements gelöst.

Der Erfindung liegt die Erkenntnis zugrunde, daß der Einsatz der Eigenleitung von der Polung des das Halbleiterelement durchfließenden Stromes abhängig ist.

Die elektrische Wechselgröße der Signalquelle hat vorzugsweise eine zum Nullpunkt wenigstens angenähert symmetrische Kurvenform.

Nach einer Weiterbildung der Erfindung enthält die Schaltungsanordnung eine Signalquelle, die dem Halbleiterelement einen Wechselstrom aufprägt, und eine Meßeinrichtung, die die aus dem eingeprägten Wechselstrom an dem Halbleiterelement resultierende Spannung detektiert. Die Schaltungsanordnung kann auch eine Signalquelle enthalten, die dem Halbleiterelement eine Wechselspannung aufprägt, und eine Meßeinrichtung, die den daraus im Halbleiterelement resultierenden Strom detektiert.

Eine weitere Ausgestaltung der Erfindung besteht darin, daß das Halbleiterelement in Reihe mit einer Impedanz, vorzugsweise einer Kapazität, geschaltet ist und die Signalquelle an dieser Reihenschaltung anliegt, und daß die Meßeinrichtung parallel zur Impedanz geschaltet ist.

Für die erfindungsgemäße Schaltungsanordnung wird vorteilhaft ein Halbleiterelement aus vorzugsweise hochohmigen Material verwendet, dessen Dotierungskonzentration etwa im Bereich von $10^{13}$ bis $10^{16}$ Dotierungsatomen/cm$^3$ liegt. Bei einem derartigen Material treten in dem für die technische Anwendung interessantesten Temperaturbereich zwei Stromleitungsmechanismen auf: Fremdleitung mit Störstellenerschöpfung und Eigenleitung. Bei niedrigen Temperaturen überwiegt die Fremdleitung, die Leitfähigkeit des Halbleitermaterials hängt nur von der Ladungsträgerbeweglichkeit ab, die mit steigender Temperatur fällt. Demzufolge steigt der spezifische Widerstand des Materials mit steigender Temperatur an. Bei höheren Temperaturen überwiegt aufgrund der mit steigender Temperatur zunehmenden Ladungsträgerdichte die Eigenleitung. Dadurch fällt der spezifische Widerstand des Halbleitermaterials mit steigender Temperatur.

Silicium beispielsweise zeigt bei den genannten Dotierungskonzentrationen im Temperaturbereich von etwa -200° C bis etwa +800° C das beschriebene Verhalten, wobei der Übergang zwischen dem Bereich der Fremdleitung und dem der Eigenleitung je nach Dotierungskonzentration zwischen etwa +100 und etwa +300° C liegt.

Der sich aus der Eigenleitung ergebende Widerstand kann sich aber nur dann einstellen, wenn die Anschlußgebiete unter den Elektroden genügende Ergiebigkeit an Ladungsträgern aufweisen. Diese Ladungsträgerergiebigkeit ist abhängig von der Ladungsträgergenerationsrate im Halbleitermaterial und von der Elektrodenfläche. Die Ladungsträgergenerationsrate wächst mit steigender Temperatur an. Andererseits benötigt man für einen größeren Strom durch das Halbleiterelement eine größere Ergiebigkeit als für einen kleinen Strom. Für das hier verwendete Halbleiterelement mit unterschiedlich großen Elektroden ergibt sich daraus ein stromrichtungsabhängiger Verlauf des Innenwiderstandes über der Temperatur, wobei außerdem die Widerstandsunterschiede mit steigendem Strom durch das Halbleiterlement größer werden.

Bei allen bekannten Schaltungsanordnungen, die ein nach dem Prinzip des radialen Ausbreitungswiderstands arbeitendes Halbleiterelement zur Messung von Temperaturen enthalten, wurde der Bereich der Fremdleitung als Meßbereich ausgenutzt. Die Stromrichtungsabhängigkeit des Innenwiderstandes, die bereits im Bereich der Fremdleitung in geringem Maß vorhanden ist, begrenzte dabei den Einsatzbereich der Halbleiterelemente und ihre Meßgenauigkeit. Nach der Erfindung wird nun gerade diese Differenz der Innenwiderstände des Halbleiterelementes in den unterschiedlichen Stromrichtungen dazu benutzt, einen Meßwert zu gewinnen. Um einen eindeutigen Zusammenhang zwischen der Temperatur und der von der Meßeinrichtung erfaßten elektrischen Meßgröße zu erhalten, müssen die Kennlinien des Innenwiderstandes in den beiden Stromrichtungen unterschiedliche Steigungen haben, d.h. das Halbleiterelement hat einen stromrichtungsabhängigen Temperaturkoeffizienten. Insbesondere ist auch das Vorzeichen des Temperaturkoeffizienten stromrichtungsabhängig. Da die Stromrichtungsabhängigkeit des Innenwiderstandes im Bereich der Fremdleitung gering ist und erst beim Einsetzen der Eigenleitung ein nennenswertes Meßsignal liefert, zeigt dieses in seinem Temperaturverlauf eine deutliche Schwellwertcharakteristik. Die Schwelltemperatur ist von der Dotierungskonzentration des Halbleiterelementes abhängig und läßt sich außerdem durch Vorgabe unterschiedlicher Stromstärken im Halbleiterelement in bestimmten Grenzen verschieben.

Grundsätzlich ist zur Auswertung der Stromrichtungsabhängigkeit des Innenwiderstandes eine elektrische Wechselgröße beliebiger Kurvenform und Frequenz anwendbar. Eine wenigstens angenähert symmetrische Kurvenform, vorzugsweise von sinus-, rechteck- oder dreieckförmigem Verlauf, vereinfacht jedoch die Auswertung des Meßsignals erheblich.

An sich sind Meßschaltungen bekannt, die Wechselspannungsquellen benutzen zur Speisung eines lichtempfindlichen Elements, um Licht zu messen oder zu überwachen. Das Element aber ist als Gleichrichter tätig und hat einen Sperrzustand, in dem das Licht keine Beiträge zur Messung liefert. In der Schaltungsanordnung gemäß der Erfindung wird Temperatur gemessen oberhalb eines Schwellwertes, weil dann die Leitfähigkeit anfängt, stromrichtungsabhängig zu werden.

Als Beispiel kann eine Lichtmeßanordnung aus der US-A- 2,054,836 genannt werden.

Die Erfindung hat den Vorteil, eine Schaltungsanordnung zu schaffen, die genaue Temperaturmessungen im Bereich der Eigenleitung des verwendeten Halbleiterelements ermöglicht. Der Arbeitsbereich für Temperaturmeßelemente, die nach dem Prinzip des radialen Ausbreitungswiderstands arbeiten, wird damit zu höheren Temperaturen hin beträchtlich erweitert, beispielsweise bei einem N-dotierten Silicium-Halbleiterelement der üblichen Bauform von etwa 150° C auf über 300° C. Vorteilhaft ist weiterhin, daß dabei die Steilheit des von der Meßeinrichtung detektierten Signals über der Temperatur größer ist als der Temperaturkoeffizient des Halbleiterelementes bei der herkömmlichen Art der Aussteuerung mit einer Gleichspannung oder einem Gleichstrom. Für viele Anwendungen ist außerdem die Schwellwertcharakteristik des Meßsignals von Vorteil, vgl. dazu auch FUNKSCHAU 1978, Heft 14, S. 679 bis 682. Die Erfindung macht daher unter Einsatz eines einfachen Halbleiterelementes mit einfacher Beschaltung eine Anordnung zur Messung von Temperaturen verfügbar, die bei geringem Abgleichsaufwand genau arbeitet und sich daher als kostengünstige Lösung für Meßaufgaben auch in Großseriengeräten eignet, z.B. in Kraftfahrzeugen, Haushaltgeräten usw.. Aufgrund der engen Toleranzen, in denen die Halbleiterelemente preisgünstig gefertigt werden können, kann bei geringeren Anforderungen an die Meßgenauigkeit ein Abgleich der Schaltungsanordnung entfallen.

Die Erfindung wird nachstehend anhand der Figuren näher erläutert. Es zeigen

Fig. 1 den temperaturabhängigen Innenwiderstand eines in einer erfindungsgemäßen Schaltungsanordnung benutzten Halbleiterelementes für beide Stromrichtungen mit der Stromstärke als Parameter,

Fig. 2 ein Prinzipschaltbild einer erfindungsgemäßen Schaltanordnung,

Fig. 3 den Verlauf der am Meßgerät V abgelesenen Spannung über der Temperatur.

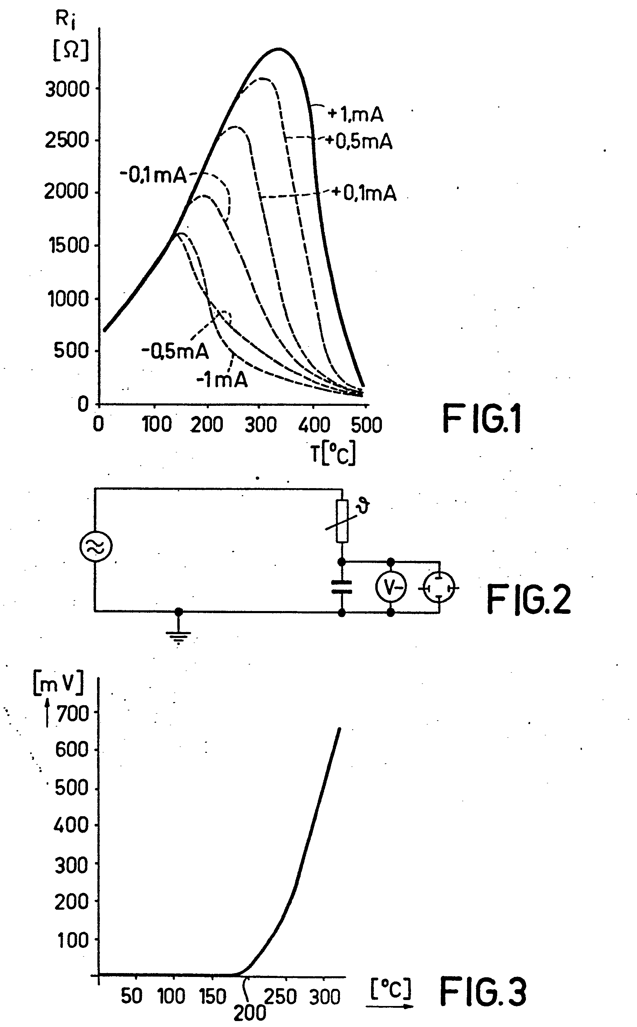

In Fig. 1 ist noch einmal der Verlauf des Innenwiderstands über der Temperatur dargestellt, wie er bereits beschrieben wurde. Der linke ansteigende Ast der Kurve kennzeichnet den Bereich der Fremdleitung, die rechten, abfallenden Äste den Bereich der Eigenleitung des Halbleiterelements. Die drei oberen dieser Äste gelten für drei verschiedene Stromstärken durch das Halbleiterelement mit einer Polung desselben derart, daß der Pluspol einer zum Messen des Innenwiderstands angelegten Gleichspannungsquelle mit der punktförmigen Elektrode verbunden ist, die drei unteren Äste für die gleichen Stromstärken bei umgekehrter Polung der Gleichspannungsquelle, d.h. wenn deren Minuspol mit der punktförmigen Elektrode verbunden ist. Je nach Stromstärke und -richtung macht sich die Eigenleitung bei unterschiedlichen Temperaturen bemerkbar, und der Innenwiderstand fällt mit steigender Temperatur ab. Man erkennt, daß die stromrichtungsabhängigen Unterschiede im Innenwiderstand mit steigender Stromstärke zunehmen und außerdem die Temperaturen, bei denen sich in den jeweiligen Stromrichtungen die Eigenleitung durchsetzt, mit steigendem Strom immer weiter voneinander abweichen. Damit lassen sich Meßbereich und Empfindlichkeit der Schaltungsanordnung unmittelbar durch den Strom einstellen.

Fig. 2 zeigt das Prinzipschaltbild einer erfindungsgemäßen Schaltungsanordnung. Eine Reihenschaltung aus einem temperaturabhängigen Halbleiterelement und einer Kapazität ist mit den Ausgangsklemmen eines Tonfrequenzgenerators verbunden, der eine sinusförmige Spannung abgibt. Parallel zur Kapazität sind ein Kathodenstrahloszillograph und ein Voltmeter geschaltet. Das Voltmeter zeigt den arithmetischen Mittelwert der Spannung über der Kapazität, d.h. ihren Gleichspannungsanteil, an.

In Fig. 3 ist der Verlauf dieser Gleichspannung über der Temperatur des Halbleiterelementes wiedergegeben. Im Bereich der Fremdleitung, in dem der Innenwiderstand des Halbleiterelementes bis auf kleine Abweichungen stromrichtungsabhängig ist, ist auch die über der Kapazität abfallende Spannung sinusförmig ohne Gleichspannungsanteil. Beim Einsatz der Eigenleitung zu höheren Temperaturen hin bewirkt die Stromrichtungsabhängigkeit des Widerstandes eine Verzerrung der Spannung über der Kapazität, es entsteht ein Gleichspannungsanteil, der mit steigender Temperatur rasch anwächst.

Die in Fig. 2 beschriebene Schaltungsanordnung wurde beispielsweise mit folgenden Bauteildaten aufgebaut.

Der Tonfrequenzgenerator führt an seinen Ausgangsklemmen eine sinusförmige Wechselspannung mit einem Spitzenwert von 1,8 V und einer Frequenz von 500 Hz. Als temperaturabhängiges Halbleiterelement wurde ein Valvo-Bauelement der Type KTY 83 verwendet. Die Kapazität hatte einen Wert von 4,7 μF.

**Patentansprüche**

1. Schaltungsanordnung zur Messung von Temperaturen unter Verwendung eines Halbleiterelementes, dessen Leitfähigkeit temperaturabhängig ist und das mit einer flächigen und gegenüberliegend mit einer nahezu punktförmigen Elektrode belegt ist und eine Schwelltemperatur hat, oberhalb der die Leitfähigkeit des Halbleiterelementes stromrichtungsabhängig wird, einer an die Elektroden angelegten Signalquelle und einer Meßeinrichtung, dadurch gekennzeichnet, daß die Signalquelle als Wechselstrom- oder Wechselspannungsquelle ausgebildet ist und daß die Meßeinrichtung die Differenz zwischen der von der Polarität des angelegten Signals abhängigen Leitfähigkeiten des Halbleiters und damit die Temperatur des Halbleiters erfaßt.

2. Schaltungsanordnung nach Anspruch 1, dadurch gekennzeichnet, daß die elektrische Wechselgröße der Signalquelle eine zum Nullpunkt wenigstens angenähert symmetrische Kurvenform hat.

3. Schaltungsanordnung nach einem der vorhergehenden Ansprüche, gekennzeichnet durch eine Signalquelle, die dem Halbleiterelement einen Wechselstrom aufprägt, und eine Meßeinrichtung, die die aus dem eingeprägten Wechselstrom an dem Halbleiterelement resultierende Spannung detektiert.

4. Schaltungsanordnung nach Anspruch 1 oder 2, gekennzeichnet durch eine Signalquelle, die dem Halbleiterelement eine Wechselspannung aufprägt, und eine Meßeinrichtung, die den daraus im Halbleiterelement resultierenden Strom detektiert.

5. Schaltungsanordnung nach Anspruch 4, dadurch gekennzeichnet, daß das Halbleiterelement in Reihe mit einer Impedanz, vorzugsweise einer Kapazität, geschaltet ist und die Signalquelle an dieser Reihenschaltung anliegt, und daß die Meßeinrichtung parallel zur Impedanz angeordnet ist.

6. Schaltungsanordnung nach einem der vorhergenden Ansprüche, dadurch gekennzeichnet, daß zur Veränderung der Schwelltemperatur die Stromstärke des durch das Halbleiterelement fließenden Stroms veränderbar ist.

7. Halbleiterelement für eine Schaltungsanordnung nach einem der vorhergehenden Ansprüche gekennzeichnet durch einen solchen Aufbau und/oder eine solche Zusammensetzung, daß die Schwelltemperatur, oberhalb der die Leitfähigkeit des Halbleiterelementes stromrichtungsabhängig ist, auf die untere Grenze des Temperaturmeßbereiches eingestellt ist.

**Claims**

1. A circuit arrangement for measuring temperatures with the use of a semiconductor element, whose conductivity is temperature-dependent and which is provided with a planar electrode and opposite thereto with a substantially point-shaped electrode and has a threshold temperature, above which the conductivity of the semiconductor element becomes dependent upon the current direction, of a signal source connected to the electrodes and of a measuring device, characterized in that the signal source is in the form of an alternating current or an alternating voltage source and in that the measuring device determines the difference between the conductivities of the semiconductor dependent upon the polarity of the signal applied and hence the temperature of the semiconductor.

2. A circuit arrangement as claimed in Claim 1, characterized in that the electric alternating quantity of the signal source has a curve form at least approximately symmetrical with respect to the zero point.

3. A circuit arrangement as claimed in any one of the preceding Claims, characterized by a signal source, which impresses an alternating current on the semiconductor element, and a measuring device, which detects the voltage resulting from the impressed alternating current at the semiconductor element.

4. A circuit arrangement as claimed in Claim 1 or 2, characterized by a signal source, which impresses an alternating voltage on the semiconductor element, and a measuring device, which detects the current resulting therefrom in the semiconductor element.

5. A circuit arrangement as claimed in Claim 4, characterized in that the semiconductor element is connected in series with an impedance, preferably a capacitor, and the signal source is connected to this series arrangement, and in that the measuring device is connected parallel to the impedance.

6. A circuit arrangement as claimed in any one of the preceding Claims, characterized in that the current strength of the current flowing through the semiconductor element is variable for varying the threshold temperature.

7. A semiconductor element for a circuit arrangement as claimed in any one of the preceding Claims, characterized by such a construction and such a composition that the threshold temperature, above which the conductivity of the semiconductor element is dependent upon the current direction, is adjusted to the lower limit of the temperature measuring range.

## Revendications

1.- Montage pour mesurer des températures à l'aide d'un élément semi-conducteur, dont la conductivité dépend de la température et qui est pourvu d'une électrode plane et, en opposition à celle-ci, d'une électrode à peu près ponctuelle et présente une température de seuil, au-dessus de laquelle la conductivité de l'élément semi-conducteur devient dépendante de la direction du courant, d'une source de signaux connectée aux électrodes et d'un dispositif de mesure, caractérisé en ce que la source de signaux à la forme d'une source de courant alternatif ou de tension alternative et que le dispositif de mesure détecte la différence entre les conductivités du semi-conducteur dépendant de la polarité du signal appliqué et ainsi la température du semi-conducteur.

2.- Montage suivant la revendication 1, caractérisé en ce que la grandeur électrique variable de la source de signaux présente une configuration de courbe au moins à peu près symétrique par rapport au point zéro.

3.- Montage suivant l'une ou l'autre des revendications 1 et 2, caractérisé par une source de signaux qui impose sur l'élément semi-conducteur un courant alternatif et un dispositif de mesure qui détecte la tension résultant du courant alternatif imposé à l'élément semi-conducteur.

4.- Montage suivant la revendication 1 ou 2, caractérisé par une source de signaux qui impose une tension alternative sur l'élément semi-conducteur et un dispositif de mesure qui détecte le courant qui en résulte dans l'élément semi-conducteur.

5.- Montage suivant la revendication 4, caractérisé en ce que l'élément semi-conducteur est connecté en série avec une impédance, de préférence une capacité, et la source de signaux est connectée à ce montage en série et le dispositif de mesure est disposé en parallèle à l'impédance.

6.- Montage suivant l'une quelconque des revendications précédentes, caractérisé en ce que pour modifier la température de seuil, l'intensité du courant qui traverse l'élément semi-conducteur peut être modifiée.

7.- Elément semi-conducteur pour un montage suivant l'une quelconque des revendications précédentes, caractérisé par une structure et/ou une composition telles que la température de seuil, au-dessus de laquelle la conductivité de l'élément semi-conducteur est dépendante de la direction de courant, est réglèe sur la limite inférieure du domaine de mesure de température.

FIG.1

FIG.2

FIG.3

1